# EUROPEAN PATENT APPLICATION

(11) **EP 2 055 901 A1**
(43) Date of publication of application: **06.05.2009**
(21) Application number: 07021316.0
(22) Date of filing: 31.10.2007
(51) Int. Cl.: F01D 11/08

(54) **Guide bucket for a turbine of a thermal power plant having a foot section**

(71) Applicant: SIEMENS AKTIENGESELLSCHAFT, 80333 München (DE)
(72) Inventor: Rosic, Budimir, CB30DY Cambridge (GB); De Lazzer, Armin, Dr., 45479 Mülheim an der Ruhr (DE)

(57) **Abstract**

A bucket (22; 20) for a turbine (10) of a thermal power plant is provided. The bucket (22; 20) comprises a foot section (33; 124) for mounting the bucket (22; 20) to an other element (16; 12) of the turbine (10), the foot section (33; 24) having an exposed portion (35; 135), which is during the operation of the turbine (10) directly exposed to a leakage fluid flow (56) of the propulsion fluid leaking through a sealing area (44) between the other element (16; 12) and a second bucket (20; 22) arranged adjacent to the first bucket (22; 20), wherein the leakage fluid flow (56) has a given flow direction (58). According to the invention the exposed portion (35; 135) of the foot section (33; 24) comprises a re-directing zone (50; 150) for re-directing the flow direction (58) of the leakage fluid flow (56), wherein the re-directing zone (50; 150) has a concave shape.

## Description

### Field of the invention

This invention relates to a bucket for a turbine of a thermal power plant, e.g. a guide bucket or a rotor bucket, which bucket comprises a foot section for mounting the bucket to an other element of the turbine, like a housing and a rotor shaft, respectively the foot section having an exposed portion, which is during the operation of the turbine directly exposed to a leakage fluid flow of the propulsion fluid leaking through a sealing area between the other element and a second bucket arranged adjacent to the first bucket, wherein the leakage fluid flow has a given flow direction. Further, the invention relates to a turbine comprising a bucket of the above type.

### Background of the invention

In a turbine of a thermal power plant a propulsion fluid or working fluid, usually in the form of steam or air, is expected to follow a predefined path, the so called flow-path, within a main flow channel of the turbine.

In a typical turbine configuration the propulsion fluid alternately passes stationary rings of guide buckets and rings of rotor buckets mounted on a rotor shaft of the turbine. The propulsion fluid interacts with blade sections of the buckets and thereby rotates the rotor buckets to propel the rotor shaft. The rotor shaft typically is connected to a generator, which converts the mechanical energy of the rotor shaft into electrical energy. In such a turbine rotating components, like the rotor shaft and the rotor buckets, are sealed against stationary components like the housing and the guide buckets. The sealing is required to prohibit the propulsion fluid from bypassing the blade sections of the turbine bucket.

The sealing technology typically used is configured such that under all possible boundary conditions of operation contact between the rotating components and the stationary components is avoided to protect the turbine from mechanical damage. Due to comparatively large axial and radial movements of the stationary components and the rotating components relative to one another during operation of the turbine sealing designs usually are of the so-called non-contacting sealing type. In this sealing type there is no sealing device contacting both components. Instead, residual axial and radial clearances are remaining.

On the other hand, the existence of clearance between the stationary parts and the rotating parts is a source of losses with respect to the possible amount of work that can be extracted from the propulsion fluid, since part of the propulsion fluid is diverted from the main flow channel and can therefore bypass the desired flow path. Conventional sealing designs therefore provide so-called sealing fins on surfaces facing in a radial direction with respect to the rotor axis, for example on the surface of a shroud of a rotor bucket facing towards the housing of the turbine. The throttling effect of such fins limits the amount of leakage fluid being diverted from the main flow of the propulsion fluid. The leakage fluid subsequently passes through a sealing cavity between the shroud of the rotor and the housing and re-enters the main flow of propulsion fluid via an area between the shroud of the rotor bucket and a foot section of the guide bucket, referred to as outlet cavity of the seal.

### Summary of the invention

It is an object of the present invention to provide a turbine of a thermal power plant of the above mentioned type which provides an improved power output during operation. Put in different words, it is an object of the invention to increase the amount of work which can be extracted during operation of the turbine from a propulsion fluid of a given pressure and temperature.

The above object is achieved according to the present invention by providing a bucket of the afore-mentioned kind, in which the exposed portion of the foot section comprises a re-directing zone for re-directing the flow direction of the leakage fluid flow, wherein the re-directing zone has a concave shape. The bucket according to the invention, also denoted as first bucket, can be a guide bucket or a rotor bucket. The second bucket is correspondingly a bucket of the other type.

Put in different words, the exposed portion of the foot section is provided with a concavely shaped surface, which is configured such, that the leakage fluid ducted through the sealing area or sealing cavity between the housing and the adjacent bucket is re-directed by this surface.

The provision of the re-directing zone causes the leakage fluid to swirl within an outlet cavity between a radial end of the second bucket, like a shroud of the second bucket, and the foot section of the first bucket, which dissipates much of the flow energy of the leakage fluid. When the leakage fluid subsequently re-enters the main fluid flow of the propulsion fluid, the flow characteristics of the main fluid flow is only minimally influenced by the re-entering leakage fluid. The re-directing zone according to the invention especially prohibits the leakage fluid from impinging on a blade section of the first bucket or of another bucket arranged subsequentially in the flow direction of the main fluid flow at an angle, which would cause a disturbance of the flow dynamics of the main fluid flow.

Such a disturbance of the flow dynamics would reduce the power transmission from the propulsion fluid to the rotor of the turbine and therefore reduce the overall power output of the turbine. By providing the re-directing zone according to the invention negative effects of the re-entering leakage fluid onto the main fluid flow are therefore reduced, which enhances the efficiency of the overall turbine. Further, due to the energy dissipation of the leakage fluid effected by the re-directing zone, an amount of swirl of the re-entering leakage fluid is reduced. Negative effects of the re-entering fluid on downstream blade rows are reduced.

Due to the re-directing of the leakage fluid flow the leakage fluid enters into the main fluid flow in an area close to the shroud of the neighbouring second bucket. Therefore, the propulsion fluid from the main fluid flow is prevented from entering into the outlet cavity in this area. The leakage fluid flow provides a blocking effect with respect to the main fluid flow. Therefore, the formation of a vortex generated by propulsion fluid from the main fluid flow entering into the outlet cavity is largely prevented. These way losses in the momentum of the main fluid flow are reduced, which increases the energy efficiency of the turbine further.

In an advantageous embodiment the re-directing surface is configured to essentially reverse the flow direction of the leakage fluid flow, in particular turn the flow direction by least 180°, preferably by 200°. A turn of the flow direction to this extent improves the above mentioned effects with regards to the mitigation of the influence of the leakage fluid flow on the flow dynamics of the main fluid flow. The above described improvement in flow guidance of the main fluid flow is also enhanced.

The before-mentioned effects are further enhanced, if the re-directing zone has a scalloped surface for guiding the leakage fluid flow. The scalloped surface allows the re-direction of the flow direction in a particularly efficient way.

It is further advantageous if the first bucket comprises a blade section having in upstream edge, which upstream edge extends in the mounted state radially with respect to a rotor shaft of the turbine and faces opposite to a flow direction of a main fluid flow of the propulsion fluid along the rotor shaft during operation of the turbine, wherein the re-directing zone comprises a protrusion protruding with respect to the upstream edge of the blade section in a direction opposite to the flow a direction of the main flow. Such a protrusion allows the leakage fluid to be re-directed more efficiently. By configuring the protrusion to protrude with respect to the upstream edge of the blade section the leakage fluid coming from the sealing cavity is prevented from exiting the outlet cavity directly into the main fluid flow. Instead, the leakage fluid is initially directed back towards the shroud of the second bucket in order to pass around the protrusion. Only thereafter the leakage fluid can merge into the main fluid flow. Therewith, the above mentioned positive effects on the flow dynamics of the propulsion fluid in the main flow channel are achieved in an improved way. The protrusion basically acts as a delimiting device delimiting the outlet cavity on its downstream direction towards the main flow channel.

It is further advantageous, if the turbine according to the invention further comprises a second bucket having a blade section with a downstream edge, which faces in the flow direction of the main fluid flow, wherein the upstream edge and the downstream edge are separated from each other by a gap between the respective blade sections, which gap has a given axial extension, wherein the protrusion protrudes in the mounted state with respect to the upstream edge by a distance of at least 10%, preferably at least 20% of the axial extension of the gap. By dimensioning in the protrusion in this way, the effects mentioned above on the flow dynamics of the turbine are enhanced even more. It is further preferable, if the protrusion of the first bucket protrudes in the mounted state with respect to the upstream edge by a distance of at least 5%, preferably at least 10% of an extension of the foot section in the axial direction.

The main fluid flow is particularly well separated from the leakage fluid flow, if the protrusion is spike-shaped. Therewith the guidance of the main flow is improved and turbulences in the main fluid flow are prevented with high efficiency.

In a further advantageous embodiment the re-direction zone further comprises a recess in the exposed portion, which is advantageously recessed with respect to the upstream edge and is located radially shifted with respect to the protrusion. In the case in which the first bucket is a guide bucket the recess is located radially outwards with respect to the protrusion. In the case, in which the first bucket is a rotor bucket the recess is located radially inwards with respect to the protrusion. Therefore, the recess is located radially further away from the other element of the turbine than the protrusion. In the case in which the first bucket is a guide bucket, the recess is located radially between the protrusion and the housing. Therefore, leakage fluid flowing along the housing after exiting the sealing cavity is smoothly re-directed by the combination of the recess and the protrusion into a direction facing the shroud of the rotor bucket. In a preferable embodiment the recess is recessed with respect to the upstream edge by at least 10% of the axial extension of the gap. It is further advantageous, if the recess is recessed with respect to the upstream edge by at least 5% of the extension of the foot section of the guide bucket in the axial direction.

It is further advantageous, if the protrusion points in the mounted state of the first bucket into a given direction, which direction includes a dominant axial component with respect to the rotor shaft and a component facing in a radial direction with respect to the rotor. In the case, in which the first bucket is a guide bucket, the direction includes a component facing radially outwards with respect to the rotor, in the case, in which the first bucket is a rotor bucket, a component facing radially inwards. In other words, the protrusion is inclined somewhat outwards/inwards with respect to the rotor shaft. This way, the leakage fluid is directed somewhat towards the housing/the rotor shaft of the turbine, which causes the leakage fluid to make a wider turn before entering into the main fluid flow of the propulsion fluid. This way less turbulences are generated in the re-entering process. The flow guidance of the main flow of propulsion fluid is therefore improved, which prohibits a separation of the main fluid flow at the location, at which the leakage fluid re-enters the main fluid flow.

It is further advantageous, if the turbine according to the invention comprises a housing surrounding a main flow channel of the propulsion fluid, wherein the foot section of the first bucket, being a guide bucket, is mounted to the housing and the protrusion is configured to form together with the housing a cavity for re-directing the leakage fluid flow. With such a cavity the flow direction of the leakage fluid can be controlled very reliably and therefore the flow direction of the leakage fluid can be re-directed efficiently to the achieved the above mentioned effects.

### Brief description of the drawings

A detailed description of the present invention is provided herein below with reference to the following diagrammatic drawings, in which
- Fig. 1: is a partial sectional view of a first embodiment of a turbine according to the present invention;
- Fig. 2: shows a detail of the turbine according to fig. 1 in an area between a shroud of a rotor bucket and a foot section of a guide bucket;
- Fig. 3: shows the detail according to fig. 2 of a turbine according to the state of the art; and
- Fig. 4: is a partial sectional view of a second embodiment of a turbine according to the present invention.

### Description of a preferred embodiment

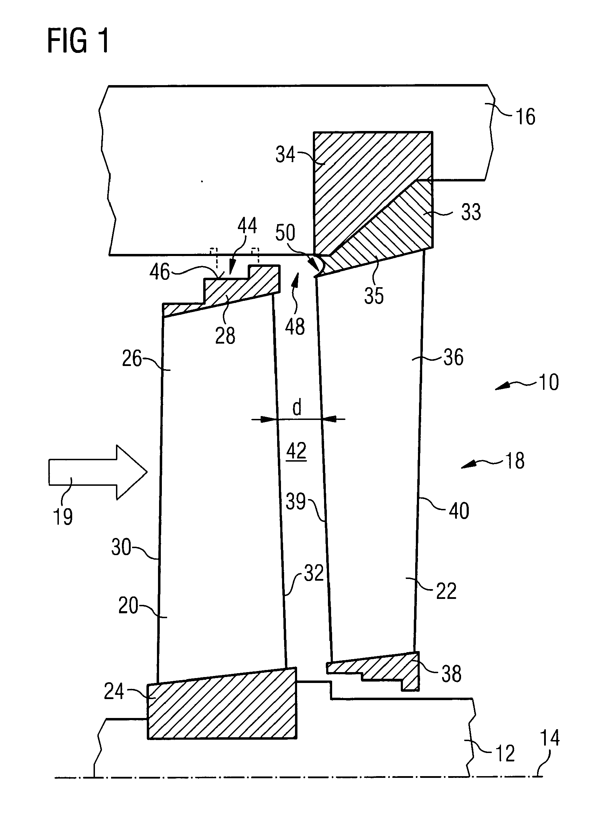

Fig. 1 shows a portion of a turbine 10 in a first embodiment according to the invention. The turbine comprises a rotor shaft 12 having a rotational axis 14. The turbine 10 further includes a housing 16 surrounding the rotor shaft 12 at a radial distance therefrom. Between the rotor shaft 12 and the housing 16 a main flow channel 18 for ducting a propulsion fluid is provided. The propulsion fluid flows in a given flow direction 19 parallel to the rotational axis 14. The turbine 10 further contains a rotor bucket 20 and a guide bucket 22. The rotor bucket 20 is mounted via a foot section 24 to the rotor shaft 12 and is a single rotor bucket 20 within a row of rotor buckets 20. The row of rotor buckets contains a number of rotor buckets 20 arranged around the circumference of the rotor shaft 12 in a given axial position and each rotor bucket 20 extending radially with respect to the rotor shaft 12. Such a row of rotor buckets 20 extends in a plane perpendicular to the rotational axis 14. Therefore, only one rotor bucket 20 is shown in the sectional view of fig. 1.

A guide bucket 22, configured for guiding a propulsion fluid powering the turbine 10, is arranged in a position next to the rotor bucket 20 shifted axially in a downstream direction with respect to the rotor bucket 20. The guide bucket 22 also comprises a foot section 33, which is mounted in the housing 16. The guide bucket 22 is also part of a row of guide buckets 22 arranged at the inside of the circumference of the housing 16 at one axial position and extending radially with respect to the rotational axis 14. In the turbine 10 several rows of guide buckets 22 and rotor buckets 20 are arranged in an alternating sequence along the rotational axis 14.

The rotor bucket shown in fig. 1 further comprises a blade section 26 and a shroud 28. The shroud 28 is arranged on the radially outer end of the blade section 26. The shroud 28 connects this end of the blade 26 with ends of other blade sections within the row of rotor buckets and therefore extends circumferentially with respect to the rotor shaft 12. Also, the guide bucket 22 comprises a blade section 36 and a shroud 38, which in this case is arranged at a radially inner end of the blade section 36. During the operation of the turbine 10 the propulsion fluid in the main flow channel 18 interacts with the blade sections 26 and 36 and thereby drives the rotor bucket 20 together with the rotor shaft 12 to rotate around the rotational axis 14. The blade sections 26 and 36 of the rotor bucket 20 and the guide bucket 22, respectively, each have an upstream edge 30 and 39, respectively, extending radially with respect to the rotational axis 14 and facing oppositely to the flow direction 19 of the propulsion fluid in the flow channel 18. Correspondingly, each of the blade sections 26 and 36 have downstream edges 32 and 40, respectively, also extending radially and facing in the flow direction 19. The downstream edge 32 of the rotor bucket 20 and the upstream edge 39 of the guide bucket 22 are separated from each other by a gap 42. The gap 42 has an axial extension d being the axial distance between the respective edges 32 and 39 in the state, in which the rotor bucket 20 is in a mounted position ready for operation of the turbine 10.

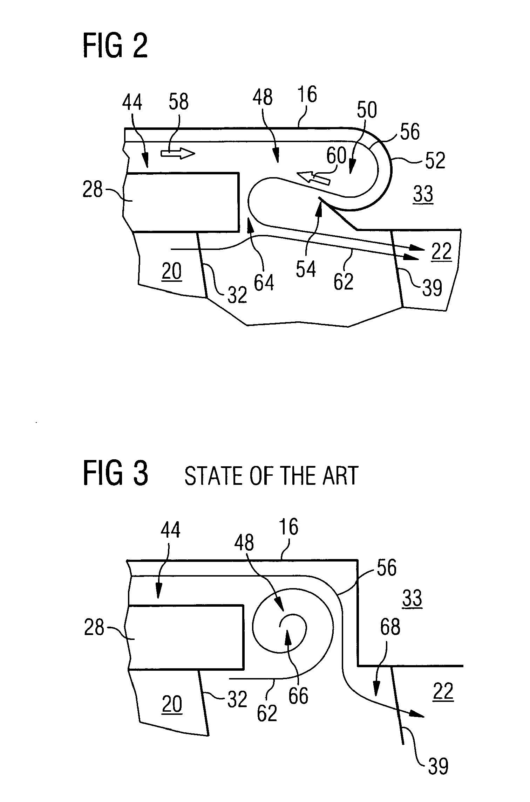

Further, the shroud 28 of the rotor bucket 20 is sealed with respect to the housing 16 by a so-called non-contacting seal. The shroud 28 and the housing 16 are therefore separated from each other by a sealing cavity 44. During operation of the turbine 10 a portion of the propulsion fluid flowing in the main flow channel 18 is diverted into the sealing cavity 44. This portion of the propulsion fluid is subsequently referred to as leakage fluid. The leakage fluid splits off the propulsion fluid in an area left of the shroud of the rotor bucket 20 according to fig. 1 and forms a leakage fluid flow 56. The main portion of the propulsion fluid continues in the main flow channel 18 and is referred to as main fluid flow 62, shown for example in fig. 2. The leakage fluid flow 56 enters the sealing cavity 44, wherein a labyrinth-liked duct structure is provided. The labyrinth-like duct structure is in part formed by a stepped profile of a sealing surface 46 of the shroud 28 facing towards the housing 16.

After passing through the sealing cavity 44 the leakage fluid flow 56 enters into an area between the shroud 28 of the rotor bucket 20 and the foot section 33 of the guide bucket 22. This area is referred to as outlet cavity 48. The area of the outlet cavity 48 is shown in greater detail in fig. 2. The foot section 33 of the guide bucket 22 has an inserted portion 34, which is inserted into the housing 16 and is therefore not exposed to the propulsion fluid. Further, the foot section 33 comprises an exposed portion 35, which sticks out of the housing and is therefore exposed to the propulsion fluid during the operation of the turbine 10.

The area of the exposed portion 35 delimiting the outlet cavity 48 is provided with a re-directing zone 50 for re-directing the flow direction of the leakage fluid flow 56. For that purpose the re-directing zone 50 has a concave shape. The re-directing zone 50 comprises a recess 52 in the exposed portion 35 of the foot section 33 followed by a protrusion 54 protruding with respect to the upstream edge 39 of the guide bucket 22 by distance of at about 30% of the axial extension d of the gap 42. The protrusion 54 is spike-shaped and points in a direction, which is essentially axial with respect to the rotational axis 14, but includes a component facing radially outwards. Therefore, the protrusion 54 points in a direction, which is slightly inclined towards the housing 16.

This configuration of the re-directing zone 50 causes the leakage fluid flow 56, entering the outlet cavity 48 in an incoming flow direction 58, to turn its flow direction by about 200° and head in a redirected flow direction 60 towards the shroud 28 of the rotor bucket 20. The shroud 28 of the rotor bucket 20 causes the leakage fluid flow 56 to reverse its flow direction 19 again and essentially assume the flow direction of the main fluid flow 62, passing by in the main flow channel 18. Due to the second turn of the leakage fluid flow 56 adjacent to the shroud 28 the main fluid flow 62 is blocked from entering into the outlet cavity 48. Therefore, a blocking region 64 is formed in this area. The leakage fluid flow 56 is after the second turn well aligned with the main fluid flow 58 and therefore merges into the main fluid flow 62 without major turbulences.

Fig. 3 shows a configuration of an outlet cavity 48 of a turbine according to the prior art. In this configuration no re-directing zone, as proposed according to the invention, is provided. Therefore, the main fluid flow 62 enters the outlet cavity 48 forming a vortex 66. The formation of such a vortex 66 results in a large loss of momentum in the propulsion fluid flowing through the main flow channel. Further, a separation region 68 appears, in which the leakage fluid flow 56 separates from the main fluid flow 62. As can be seen in fig. 2, according to the invention the formation of a vortex and a separation region can be avoided by the provision of the re-directing zone 50.

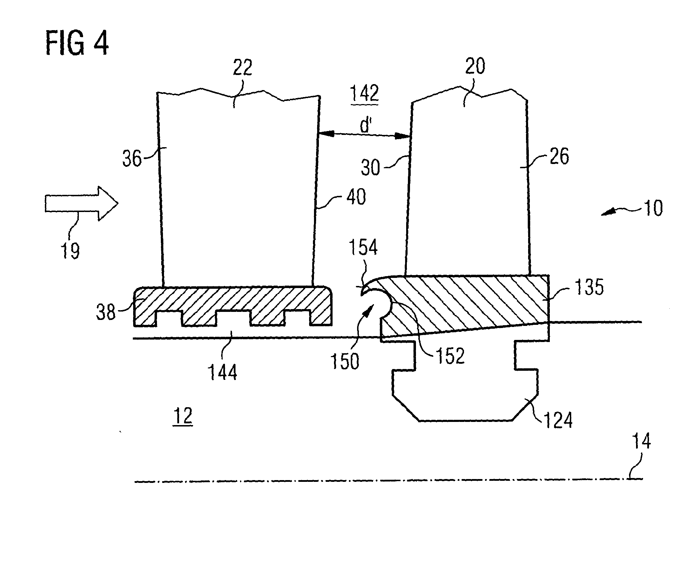

Fig. 4 shows a portion of a turbine 10 in a second embodiment according to the invention. Corresponding parts in the embodiment shown in figs. 1 and 2 are referred to with the same reference numbers. In the embodiment according to fig. 4 a rotor bucket 20 is arranged downstream of a guide bucket 22. The guide bucket 22 and the rotor bucket 20 according to fig. 4 are separated from each other by a gap 142, which extends from a downstream edge 40 of the guide bucket 22 and upstream edge 30 of the rotor bucket 20. The gap 142 has an axial extension of d'. The rotor bucket 20 is mounted to the rotor shaft 12 via a foot section 124. The foot section 124 comprises an exposed portion 135, which sticks out of the rotor shaft 12 and is therefore exposed to the propulsion fluid during the operation of the turbine 10. The area of the exposed portion 135 facing towards a shroud 38 of the guide bucket 22 is provided with the re-directing zone 150 for re-directing to flow direction of the fluid flow of leakage fluid leaking through a sealing cavity between the shroud 38 of the guide bucket 22 and the rotor shaft 12. In analogy to the re-directing zone 50 of fig. 1 and 2 the re-directing zone 150 comprises a recess 152 in the exposed portion 135 of the foot section 124 followed by a protrusion 154, protruding with respect to the upstream edge 30 of the rotor bucket 20 by a distance of about 30 % of the axial extension d' of the gap 142. The protrusion 154 is spiked-shaped and points in a direction, which is the essentially axial with respect to the rotational axis 14, but includes a component facing radially inwards. Therefore the protrusion 154 points in a direction, which is slightly inclined towards the rotor shaft 12.

It is further noted, that a guide bucket 22 according to fig. 1 can be combined with a rotor bucket 20 according to fig. 4.

## Claims

1. Bucket (22; 20) for a turbine (10) of a thermal power plant, which bucket (22; 20) comprises a foot section (33; 24) for mounting said bucket (22; 20) to an other element (16; 12) of said turbine (10), said foot section (33; 24) having an exposed portion (35; 135), which is during the operation of said turbine (10) directly exposed to a leakage fluid flow (56) of said propulsion fluid leaking through a sealing area (44) between said other element (16; 12) and a second bucket (20; 22) arranged adjacent to said first bucket (22; 20),
wherein said leakage fluid flow (56) has a given flow direction (58),
**characterized in that** said exposed portion (35; 135) of said foot section (33; 124) comprises a redirecting zone (50; 150) for redirecting said flow direction (58) of said leakage fluid flow (56), wherein said redirecting zone (50; 150) has a concave shape.

2. Bucket according to claim 1,
**characterized in that** said first bucket is a guide bucket (22) and said other element is a housing (16) of said turbine (10).

3. Bucket according to claim 1,
**characterized in that** said first bucket is a rotor bucket (20) and said other element is a rotor shaft (12) of said turbine (10).

4. Bucket according to any one of the preceding claims,
**characterized in that** said redirecting zone (50; 150) is configured to essentially reverse the given flow direction (58) of said leakage fluid flow (56), in particular turn the given flow direction (58) by at least 180°, preferably by 200°.

5. Bucket according to any one of the preceding claims,
**characterized in that** said redirecting zone (50; 150) has a scalloped surface for guiding said leakage fluid flow (56).

6. Bucket according to any one of the preceding claims,
**characterized in that** said first bucket (22; 20) comprises a blade section (36; 26) having an upstream edge (39; 30), which upstream edge (39; 30) extends in the mounted state radially with respect to a rotor shaft (12) of said turbine (10) and faces oppositely to a flow direction (19) of a main fluid flow (62) of said propulsion fluid along said rotor shaft (12) during operation of said turbine (10),
wherein said redirecting zone (50; 150) comprises a protrusion (54; 154) protruding with respect to said upstream edge (39, 30) of said blade section (36; 26) in a direction opposite to said flow direction (19) of said main fluid flow (62).

7. Guide bucket according to claim 6,
**characterized in that** said protrusion (54; 154) protrudes in the mounted state with respect to said upstream edge (39; 30) by a distance of at least 10%, preferably at least 20%, of an axial extension (d, d') of a gap (42; 142) between said upstream edge (39; 30) and a blade section (26; 36) of said second bucket (20; 22) arranged next to said upstream edge (39; 30).

8. Bucket according to claim 6 or 7,
**characterized in that** said protrusion (54; 154) is spike-shaped.

9. Guide bucket according to any one of claims 6 to 8,
**characterized in that** said redirecting zone (50; 150) further comprises a recess (52; 152) in said exposed portion (35; 135), which is advantageously recessed with respect to said upstream edge (39; 30) and is located radially shifted with respect to said protrusion (54; 154).

10. Bucket according to any one of claims 6 to 9,
**characterized in that** said protrusion (54; 154) points in the mounted state of said first bucket (22; 20) into a given direction,
which direction includes a dominant axial component with respect to said rotor shaft (12) and includes a component facing in a radial direction with respect to said rotor shaft (12).

11. Turbine (10) for a thermal power plant comprising a bucket (22; 20) according to any one of the preceding claims.

12. Turbine according to claim 11,
**characterized in that** said bucket (22; 20), in particular a guide bucket (22), comprises a blade section (36; 26) having an upstream edge (39; 30), which faces oppositely to a flow direction (19) of a main flow (62) of said propulsion fluid, and said turbine (10) further comprises a second bucket (20; 22), in particular a rotor bucket (20) having a blade section (26) with a downstream edge (32; 40), which faces in said flow direction (19) of said main flow (62), wherein said upstream edge (39, 30) and said downstream edge (32; 40) are separated from each other by a gap (42; 142) between the respective blade sections (36, 26), which gap (42; 142) has a given axial extension (d, d'),
wherein said protrusion (54, 154) protrudes in the mounted state with respect to said upstream edge (39; 30) by a distance of at least 10%, preferably at least 20%, of said axial extension (d, d') of said gap (42; 142).

13. Turbine according to claim 11 or 12, **characterized by** a housing (16) surrounding a main flow channel (18) of said propulsion fluid,
wherein said foot section (33) of said first bucket (22), which is a guide bucket, is mounted to said housing (16) and said protrusion (54) is configured to form together with said housing (16) a cavity for redirecting said leakage fluid flow (56).

14. Turbine according to claim 11 or 12, **characterized in that** said foot section (124) of said first bucket (20), which is a rotor bucket, is mounted to a rotor shaft (12) of said turbine (10) and said protrusion (154) is configured to form together with said rotor shaft (12) a cavity for redirecting said leakage fluid flow (56).
